# FASCICULE DE BREVET EUROPEEN

(11) **EP 3 695 107 B1**
(45) Date de publication et mention de la délivrance du brevet: **20.04.2022**
(21) Numéro de dépôt: 18812228.7
(22) Date de dépôt: 09.10.2018
(51) Int. Cl.: F02K 9/97, B64G 1/58, F01D 25/14, F02C 7/24, B32B 7/08, B32B 15/04

(54) **PROTECTION THERMIQUE, SON PROCÉDÉ DE FABRICATION ET DIVERGENT COMPRENANT UNE TELLE PROTECTION THERMIQUE**
THERMISCHER SCHUTZ, VERFAHREN ZU SEINER HERSTELLUNG UND DÜSE MIT EINEM SOLCHEN THERMISCHEN SCHUTZ
THERMAL PROTECTION, METHOD FOR MANUFACTURING SAME AND NOZZLE COMPRISING SUCH THERMAL PROTECTION

(30) Priorité: 12.10.2017 FR 1759571
(43) Date de publication de la demande: 19.08.2020
(73) Titulaire: ArianeGroup SAS, 78130 Les Mureaux (FR)
(72) Inventeur: GUIRAUD, Julien, 78970 Mezieres Sur Seine (FR); CLAUDEL, Sylvain, 33160 Saint Medard En Jalles (FR); DESBORDES, Mathieu, 33300 Bordeaux (FR); TORRES, Emmanuel, 33710 Saint Ciers De Canesse (FR); HAUTECOUVERTURE, François, 78710 Rosny Sur Seine (FR)
(74) Mandataire: Cabinet Beau de Loménie
(86) Numéro de dépôt international: PCT/FR2018/052496
(87) Numéro de publication internationale: WO 2019/073167

(56) Documents cités:
- US-A- 5 560 569
- US-A1- 2003 025 040
- US-A1- 2014 087 158
- US-A1- 2016 046 098

## Description

Le présent exposé concerne une protection thermique, en particulier une protection thermique présentant deux faces dites « chaudes » et une tenue mécanique satisfaisante.

Par exemple, sur un lanceur spatial, aussi, appelé fusée, les divergents qui équipent les moteurs sont soumis, en vol, à des flux thermiques importants provenant de l'intérieur et de l'extérieur du divergent. Le flux thermique extérieur peut par exemple provenir des propulseurs à poudre disposés autour du divergent.

Afin de garantir l'intégrité mécanique du divergent, c'est-à-dire notamment en limitant la température du divergent, il est envisagé de le protéger le divergent à l'aide d'une protection thermique.

Les protections thermiques connues sont par exemple des tuiles thermiques qui sont collées ou boulonnées sur une surface froide. Ces tuiles présentent une bonne tenue mécanique mais la température du divergent rend impossible le collage de telles tuiles sur le divergent. Par ailleurs, la différence entre le coefficient de dilatation thermique du divergent et le coefficient de dilatation thermique des tuiles thermiques rend leur boulonnage complexe.

Un autre type de protection thermique connu est formé par les tissus réfractaires. Toutefois, ce type de tissu ne présente pas de propriétés mécaniques satisfaisantes pour des applications où la tenue mécanique de la protection thermique est requise.

Ces inconvénients peuvent également exister pour d'autres pièces qu'un divergent de moteur de fusée. En effet, ce problème se pose dès lors qu'une pièce est soumise à des flux thermiques importants provenant de chaque face de la pièce.

US2003/025040 décrit une structure de protection thermique.

### Objet et résumé de l'invention

Le présent exposé vise à remédier au moins en partie à ces inconvénients.

A cet effet, le présent exposé concerne une protection thermique comprenant, superposées l'une sur l'autre dans l'ordre, une plaque métallique, une première couche de matériau isolant, une couche de fibres réfractaires et une deuxième couche de matériau isolant, la plaque métallique comportant des pattes de retenue de la couche de fibres réfractaires.

La plaque métallique confère la tenue mécanique à la protection thermique et permet de fixer la protection thermique sur une surface « chaude » d'une pièce à protéger thermiquement. On entend par surface « chaude », une surface soumise à une température supérieure ou égale à 600 K (kelvin), par exemple supérieure ou égale à 800 K. On comprend que la plaque métallique est réalisée dans un alliage présentant une bonne tenue mécanique aux températures de fonctionnement de la protection thermique et une certaine résistance à l'oxydation ou à la corrosion à chaud à ces mêmes températures. On comprend donc que la plaque métallique permet de fixer les couches de matériau isolant à l'aide de la couche de fibres réfractaires sur une surface « chaude ».

En outre, cette plaque métallique peut facilement être découpée et mise en forme pour s'adapter à la forme de la surface de la pièce sur laquelle la plaque métallique sera assemblée, c'est-à-dire à la surface de la pièce que l'on souhaite protéger thermiquement.

La couche de fibres réfractaires forme un réseau continu de fibres entre la première couche de matériau isolant et la deuxième couche de matériau isolant. La couche de fibres réfractaires peut cependant présenter des espaces entre les fibres réfractaires. Selon le procédé utilisé pour poser la première couche de matériau isolant et/ou la deuxième couche de matériau isolant, les espaces entre les fibres réfractaires peuvent être comblés par le matériau isolant de la première et/ou de la deuxième couche.

On comprend que les pattes de retenue de la plaque métallique, qui retiennent la couche de fibres réfractaires, retiennent également la première couche de matériau isolant. La couche de fibres réfractaires retenue par les pattes de retenue de la plaque métallique permet ainsi de garantir une tenue mécanique satisfaisante de la première couche de matériau isolant et réduit les risques de séparation de la première couche de matériau isolant et de la plaque métallique sous l'effet de la différence de coefficients de dilatation thermique de la plaque métallique et du matériau isolant. En effet, lorsque la température augmente, les coefficients de dilatation thermique de la plaque métallique et du matériau isolant étant différents l'un de l'autre, des forces de cisaillement vont apparaître entre la plaque métallique et la première couche de matériau isolant. Ces forces de cisaillement peuvent provoquer une désolidarisation au moins partielle du matériau isolant de la première couche et de la plaque métallique. Cependant, comme la première couche de matériau isolant est traversée par les pattes de retenue qui retiennent la couche de fibres réfractaires et est également retenue par la couche de fibres réfractaires, la première couche de matériau isolant reste en contact avec la plaque métallique.

La deuxième couche de matériau isolant comprend une surface libre de la protection thermique disposée du côté opposé à la plaque métallique et permet de protéger thermiquement les pattes de retenue de la plaque métallique d'un flux thermique présent sur la surface libre.

Dans certains modes de réalisation, la plaque métallique est en superalliage.

Un superalliage est un alliage complexe de matériaux métalliques, généralement à base de nickel ou à base de cobalt, dotés d'une bonne tenue mécanique à haute température, c'est-à-dire supérieure ou égale à 700 K, de préférence supérieure ou égale à 800 K, et d'une certaine résistance à l'oxydation ou à la corrosion à chaud.

Le superalliage peut être un superalliage à base de nickel, tel que les superalliages communément désignés par la marque déposée Inconel^{®}, tels que le superalliage Inconel 625^{®} ou le superalliage Inconel 718^{®}, ou par la marque déposée Haynes^{®}, tel que le superalliage Haynes^{®} 230^{®}.

Dans certains modes de réalisation, le matériau isolant de la deuxième couche est un matériau isolant projeté.

La deuxième couche de matériau isolant peut ainsi s'adapter à la forme de la première couche de matériau isolant et/ou à la forme de la plaque métallique. On peut également ne pas avoir à découper le matériau isolant. En outre, cela permet également de noyer la couche de fibres réfractaires au moins en partie dans la deuxième couche de matériau isolant de sorte à réduire les risques de détachement de la deuxième couche de matériau isolant. En effet, le matériau isolant peut pénétrer dans les espaces présents entre les fibres réfractaires et combler ces espaces. Les fibres réfractaires sont ainsi au moins partiellement incorporées dans la deuxième couche de matériau isolant. Les fibres réfractaires étant retenues sur la plaque métallique par les pattes de retenues, la deuxième couche de matériau isolant est également retenue sur la plaque métallique.

Un matériau isolant projeté présente notamment un état de surface moins régulier qu'un matériau isolant coulé, son état de surface est moins lisse, c'est-à-dire que la surface d'un matériau isolant projeté présente une certaine rugosité de surface qui ne sera moins, voire quasiment pas, présente si le matériau isolant est coulé. Ainsi, on peut différencier un matériau isolant projeté d'un matériau isolant coulé par l'aspect de la surface du matériau isolant.

Comme exemple de matériau isolant projetable, c'est-à-dire qui peut être projeté, on peut citer le matériau isolant comprenant des charges incorporées dans une matrice à base d'un élastomère en silicone commercialisée sous la marque déposée Prosial^{®}. Ce matériau est ensuite polymérisé à environ 35°C (degré centigrade) pour former une couche de matériau isolant projeté. Cette polymérisation permet d'obtenir les propriétés mécaniques et thermiques finales du matériau isolant.

Dans certains modes de réalisation, le matériau isolant de la première couche est un matériau isolant projeté.

La première couche de matériau isolant peut ainsi s'adapter à la forme de la plaque métallique. On peut également ne pas avoir à découper le matériau isolant. Ce mode de mise en œuvre du matériau isolant permet de réduire les coûts.

Dans certains modes de réalisation, le matériau isolant de la première et/ou de la deuxième couche est un matériau isolant déposé.

Dans certains modes de réalisation, le matériau isolant de la première et/ou de la deuxième couche est un matériau isolant moulé.

Comme exemple de matériau isolant déposé ou moulable, on peut citer des matériaux commercialisés sous la marque déposée Norcoat^{®}, comme par exemple le Norcoat 4000^{®} ou le Norcoat 5000^{®}. Le Norcoat^{®} a une température de polymérisation d'environ 70°C.

Dans certains modes de réalisation, le matériau isolant de la première couche et le matériau isolant de la deuxième couche sont différents.

Dans certains modes de réalisation, le matériau isolant de la première couche et le matériau isolant de la deuxième couche sont identiques.

Dans certains modes de réalisation, la plaque métallique comporte des moyens d'attache de la protection thermique sur une surface à protéger.

Par exemple, ces moyens d'attache sont formés par des orifices de fixation de la plaque métallique sur la surface à protéger.

Dans certains modes de réalisation, les pattes de retenue sont formées par des crevés ménagés dans la plaque métallique.

Ainsi, la formation des pattes de retenue est réalisée sans ajout de matière à la plaque métallique. Cela permet de ne pas augmenter la masse de la protection thermique par ajout de pattes de retenue rapportées sur la plaque métallique. Par ailleurs, les risques de détachement d'une patte métallique sous les efforts combinés des sollicitations thermiques et mécaniques sont réduits. En outre, les pattes de retenue étant en métal, les pattes de retenue peuvent être pliées sur la couche de fibres réfractaires sans se casser.

Dans certains modes de réalisation, la patte de retenue comporte une partie de pliage, disposée entre une première partie et une deuxième partie de la patte de retenue 22, la partie de pliage présentant une largeur inférieure à la largeur des première et deuxième parties de la patte de retenue 22.

Cette partie de pliage permet un pliage plus aisé de la patte de retenue.

Dans certains modes de réalisation, la patte de retenue a une forme générale de « T ».

Une branche horizontale du « T » coopère avec un élément d'arrêt, par exemple une rondelle quart de tour.

Dans certains modes de réalisation, les fibres réfractaires sont des fibres de silice.

Les fibres de silice peuvent par exemple avoir une teneur en silice (SiO₂) supérieure ou égale à 99% en masse. Les fibres de silice peuvent être des fibres continues de silice pure fondue amorphe et présenter sur leur surface un composé d'ensimage.

Le présent exposé concerne également un divergent de moteur de fusée comportant une protection thermique telle que définie précédemment assemblée sur une surface du divergent.

On comprend que le divergent de moteur de fusée peut comporter une pluralité de protections thermiques telles que définies précédemment, chaque protection thermique étant assemblée sur le divergent. Chaque protection thermique peut être de forme légèrement différente et chaque protection thermique adaptée à la forme de la surface qu'elle protège. Le divergent est donc protégé par la protection thermique, notamment des flux thermiques qui peuvent provenir des propulseurs à poudre disposés autour du divergent.

Dans certains modes de réalisation, chaque protection thermique peut être assemblée par boulonnage sur le divergent, c'est-à-dire que la plaque métallique est boulonnée sur le divergent ou un élément du divergent.

Le présent exposé concerne aussi un procédé de fabrication d'une protection thermique comprenant les étapes suivantes :
- découpe et mise en forme d'une plaque métallique ;
- formation de pattes de retenue sur la plaque métallique ;
- pose d'une première couche de matériau isolant sur la plaque métallique ;
- pose d'une couche de fibres réfractaires sur la première couche de matériau isolant ;
- fixation de la première couche de matériau isolant et de la couche de fibres réfractaires sur la plaque métallique au moyen des pattes de retenue ;
- pose d'une deuxième couche de matériau isolant sur la première couche de matériau isolant et sur la couche de fibres réfractaires.

Dans certains modes de réalisation, la formation des pattes de retenue est réalisée par découpe partielle de la plaque métallique.

Dans certains modes de réalisation, la patte de retenue est pliée.

Dans certains modes de réalisation, la fixation de la première couche de matériau isolant et la couche de fibres réfractaires sur la plaque métallique est réalisé par coopération de la patte de retenue et d'un élément d'arrêt, par exemple une rondelle quart de tour.

Dans certains modes de réalisation, la pose de la deuxième couche de matériau isolant est réalisée par projection du matériau isolant sur la couche de fibres réfractaires.

Dans certains modes de réalisation, la pose de la première couche de matériau isolant est réalisée par projection du matériau isolant sur la plaque métallique.

Dans certains modes de réalisation, la pose de la première couche de matériau isolant est réalisée par projection du matériau isolant sur la plaque métallique et la première couche de matériau isolant, la couche de fibres réfractaires et la deuxième couche de matériau isolant sont polymérisées en une étape unique sur la plaque métallique.

On comprend que la première et la deuxième couche de matériau isolant sont polymérisées et qu'elles emprisonnent la couche de fibres réfractaires entre elles.

Lorsque la première couche et la deuxième couche de matériau isolant sont posées sous une forme qui requiert une polymérisation, on peut polymériser la première et la deuxième couche de matériau isolant ensembles et non l'une après l'autre. Cela permet de réduire le temps de fabrication de la protection thermique. Par ailleurs, cela permet également d'obtenir une meilleure cohésion mécanique entre la première couche et la deuxième couche de matériau isolant, la deuxième couche étant posée sur la première couche de matériau isolant non polymérisé. Ainsi, la couche de fibres réfractaires peut être immergée dans le matériau isolant de la première et de la deuxième couche.

Dans certains modes de réalisation, la première couche de matériau isolant est réalisée par projection du matériau isolant sur la plaque métallique et la couche de fibres réfractaires est déposée sur la première couche de matériau isolant, la première couche de matériau isolant est polymérisée et emprisonne la couche de fibres réfractaires, la deuxième couche de matériau isolant est ensuite réalisée par projection du matériau isolant sur la première couche de matériau isolant polymérisée et la couche de fibres réfractaires et la deuxième couche de matériau isolant est polymérisée.

En polymérisant la première couche de matériau isolant séparément de la deuxième couche de matériau isolant, on peut obtenir une épaisseur totale de matériau isolant supérieure à l'épaisseur totale maximale que l'on peut obtenir lorsque les première et deuxième couches de matériau isolant sont polymérisées ensemble. La deuxième couche de matériau isolant étant projetée non polymérisée sur l'ensemble formé par la première couche de matériau isolant polymérisée qui emprisonne la couche de fibres réfractaires, la deuxième couche de matériau isolant, après polymérisation de la deuxième couche de matériau isolant, présente une bonne cohésion mécanique avec la première couche de matériau isolant polymérisée.

### Brève description des dessins

D'autres caractéristiques et avantages de l'invention ressortiront de la description suivante de modes de réalisation de l'invention, donnés à titre d'exemples non limitatifs, en référence aux figures annexées, sur lesquelles :
- la figure 1 est une vue schématique d'un lanceur spatial ;
- la figure 2 est une vue schématique d'un divergent ;
- la figure 3 est une vue schématique en coupe d'une protection thermique de la figure 2 ;
- la figure 4 est une vue schématique en perspective d'une plaque métallique ;
- la figure 5 est une vue schématique en perspective d'une protection thermique en cours de fabrication ;
- les figures 6A, 6B, 8A et 8B sont des vues schématiques partielles de pattes de retenues ;
- la figure 7 est un ordinogramme représentant les étapes d'un procédé de fabrication d'une protection thermique.

### Description détaillée de l'invention

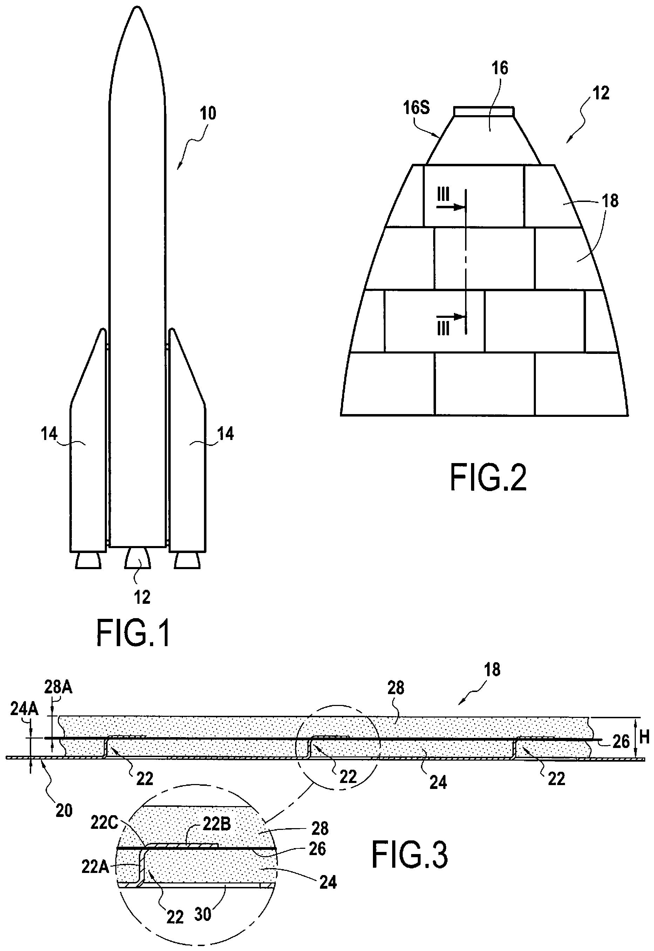

La figure 1 est une vue schématique d'un lanceur spatial ou fusée 10. En particulier, la fusée 10 comporte un divergent 12 de moteur principal de fusée et des propulseurs à poudre 14 latéraux.

Ces propulseurs à poudre 14 sont généralement utilisés comme propulseurs d'appoint du premier étage de la fusée lors de la poussée initiale.

Ainsi, lors de la première phase de vol de la fusée 10, des gaz chauds issus de la chambre de combustion du moteur de la fusée sont expulsés par le divergent 12. La température de ces gaz peut atteindre 1000 K.

Les propulseurs à poudre 14 émettent des gaz dont la température peut atteindre 2500 K.

Aussi, le divergent 12 est donc soumis à deux flux thermiques de gaz dont les températures sont très élevées.

Le divergent 12 comporte une paroi 16 dont une surface extérieure 16S est recouverte d'une pluralité de protections thermiques 18. On comprend que la paroi 16 du divergent 12 est à une température qui ne permet pas l'utilisation de colle. Aussi, les protections thermiques 18 sont assemblées sur la surface extérieure 16S du divergent 12, par exemple par boulonnage. Ainsi, les protections thermiques 18 sont fixées sur le divergent 12 et sont donc solidaires de la paroi 16 du divergent 12. Les protections thermiques 18 protègent la paroi 16 du divergent du flux de gaz chaud émis par les propulseur à poudre 14.

La paroi 16 du divergent 12 est par exemple réalisée en Inconel 625^{®}. On pourrait également envisager d'utiliser un Inconel 718^{®} ou un Haynes^{®} 230^{®}. Ces matériaux présentent une bonne tenue mécanique à la température des gaz sortant du divergent 12, par exemple entre 800 K et 1100 K.

Grâce à la pluralité de protections thermiques 18 sur la surface extérieure 16S du divergent 12, la paroi 16 du divergent 12 est protégée des gaz chauds provenant des propulseurs à poudre 14. Cela permet de garantir l'intégrité mécanique du divergent 12.

Comme représenté sur la figure 3, la protection thermique 18 comprend, superposées l'une sur l'autre dans l'ordre, une plaque métallique 20, une première couche 24 de matériau isolant, une couche de fibres réfractaires 26 et une deuxième couche 28 de matériau isolant. La plaque métallique 20 comporte des pattes de retenue 22 de la couche de fibres réfractaires 26.

Dans le mode de réalisation de la figure 3, les pattes de retenue 22 sont obtenues par découpe partielle de la plaque métallique 20 et pliage de la patte de retenue 22 à environ 90° par rapport à la plaque métallique 20, si bien que la plaque métallique présente des orifices 30 à l'emplacement de la découpe partielle de la plaque métallique 20. On entend par environ 90°un angle de 90°+/- 5°. Par exemple, la plaque métallique peut être réalisée dans le même matériau que celui de la paroi du divergent 16. La plaque métallique peut également être dans un matériau différent de celui de la paroi du divergent 16. Dans ce mode de réalisation, la plaque métallique peut présenter une épaisseur de 0,5 mm (millimètre). Par exemple, les pattes de retenue 22 peuvent présenter une largeur d'environ 5 mm et une longueur d'environ 12 mm. Chaque patte de retenue 22 comporte une première partie 22A orientée à environ 90° par rapport à la plaque métallique 20 et une deuxième partie 22B approximativement parallèle à la plaque métallique 20, c'est-à-dire orientée à environ 0° par rapport à la plaque métallique 20, soit un angle de 0° +/- 5°.

Dans ce mode de réalisation, les pattes de retenue 22 sont espacées l'une de l'autre d'environ 100 mm. On comprend que cet espacement dépend notamment de la nature du matériau isolant et de l'épaisseur de la première et de la deuxième couche de matériau isolant, c'est-à-dire de la masse du matériau isolant de la première et de la deuxième couche.

La plaque métallique 20 étant réalisée dans le même alliage métallique que la paroi 16 du divergent 12, lors de la montée en température du divergent 12, il y a peu de différence de dilatation thermique entre la paroi 16 et la plaque métallique 20.

Le matériau isolant de la première couche 24 et le matériau isolant de la deuxième couche 28 sont identiques. Par exemple, le matériau isolant est du Prosial^{®} qui a été projeté et ensuite polymérisé afin de lui conférer ses propriétés mécaniques et thermiques finales.

La couche de fibres réfractaires 26 est une couche de fibres de silice, en particulier, des fibres de silice fondue amorphe. Les fibres sont continues et présentent un diamètre supérieur ou égale à 9 µm (micromètre). La couche de fibres réfractaires 26 forme un entrelacs de fibres continues espacées les unes des autres par des espaces qui peuvent être comblés par le matériau isolant.

La première couche 24 de matériau isolant peut présenter une épaisseur 24A qui peut être égale à l'épaisseur 28A de la deuxième couche 28 de matériau isolant. L'épaisseur de la couche de fibres réfractaires 26 étant faible par rapport aux épaisseurs 24A, 28A des première et deuxième couche 24, 28 de matériau isolant, on considère que l'épaisseur totale H de matériau isolant est égale à la somme de l'épaisseur 24A de la première couche 24 de matériau isolant et de l'épaisseur 28A de la deuxième couche 28 de matériau isolant.

Par exemple, l'épaisseur 24A de la première couche 24 de matériau isolant peut être égale à environ 7 mm et égale à l'épaisseur 28A de la deuxième couche 28 de matériau isolant. Aussi, l'épaisseur totale H de matériau isolant est égale à environ 14 mm. Par environ 7 mm et environ 14 mm, on entend 7 mm +/- 1 mm et 14 mm +/- 1 mm.

Ainsi, la première partie 22A de la patte de retenue 22 mesure environ 7 mm de haut et la deuxième partie 22B de la patte de retenue 22 mesure environ 5 mm.

Les dimensions sont données à titre d'exemple et peuvent être modifiées selon les contraintes thermiques et mécaniques subies par la protection thermique 18.

De manière générale, le dimensionnement est réalisé comme suit : on détermine par calcul thermique l'épaisseur requise de matériau isolant qui permet de maintenir la plaque métallique 20 et les pattes de retenue 22 à une température inférieure à une température donnée, par exemple de 1000 K. Ensuite, par modélisation par éléments finis, les pattes de retenue 22 sont dimensionnées afin de garantir la tenue de la première couche 24 de matériau isolant et de la deuxième couche 28 de matériau isolant en tenant compte de la couche de fibres réfractaires 26.

On va maintenant décrire le procédé de fabrication 100 d'une protection thermique 18.

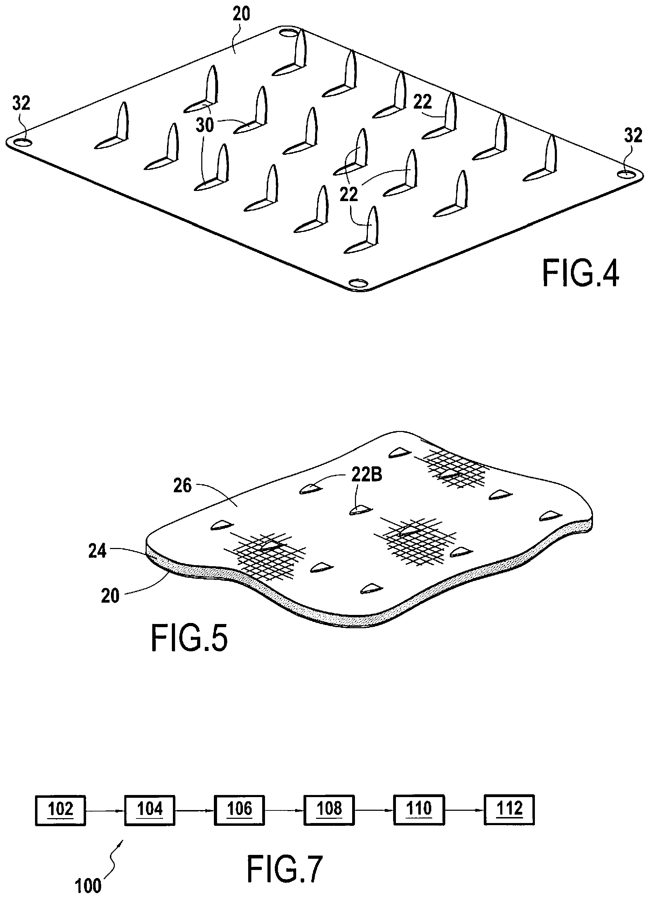

Comme représenté sur la figure 7, la protection thermique 18 est obtenue en plusieurs étapes.

Le procédé de fabrication 100 comporte une étape 102 de découpe et de mise en forme de la plaque métallique 20 ainsi qu'une étape 104 de formation de pattes de retenue 22 sur la plaque métallique 20. On comprend que ces deux étapes 102, 104 peuvent être réalisées en même temps ou l'une après l'autre ou l'étape 102 de découpe et de mise en forme peut être réalisée partiellement et l'étape 104 de formation de pattes de retenue 22 peut être ensuite réalisée partiellement ou totalement avant de terminer l'étape 102 de découpe et de mise en forme.

Ainsi, par exemple, la plaque métallique 20 peut être découpée afin de lui donner une sa forme générale, la plaque métallique 20 peut aussi être découpée pour former des orifices de fixation 32 de la plaque métallique 20. On peut également découper partiellement la plaque métallique 20 pour former les pattes de retenue 22.

Les pattes de retenue 22 peuvent ensuite être pliées à environ 90° par rapport à la plaque métallique afin d'obtenir une plaque métallique 20 telle que représentée sur la figure 4. Comme on peut le constater sur la figure 4, une fois les pattes de retenue 22 pliées, la plaque métallique présente des orifices 30 à l'emplacement de la découpe partielle de la plaque métallique 20. La première partie 22A et la deuxième partie 22B de la patte de retenue 22 sont alignées l'une par rapport à l'autre.

On peut également envisager de former la plaque métallique 20 afin qu'elle épouse la forme de la partie de la surface extérieure 16S de la paroi 16 du divergent sur laquelle elle est destinée à être assemblée, par exemple par boutonnage, les vis passant à travers les orifices de fixation 32 de la plaque métallique 20.

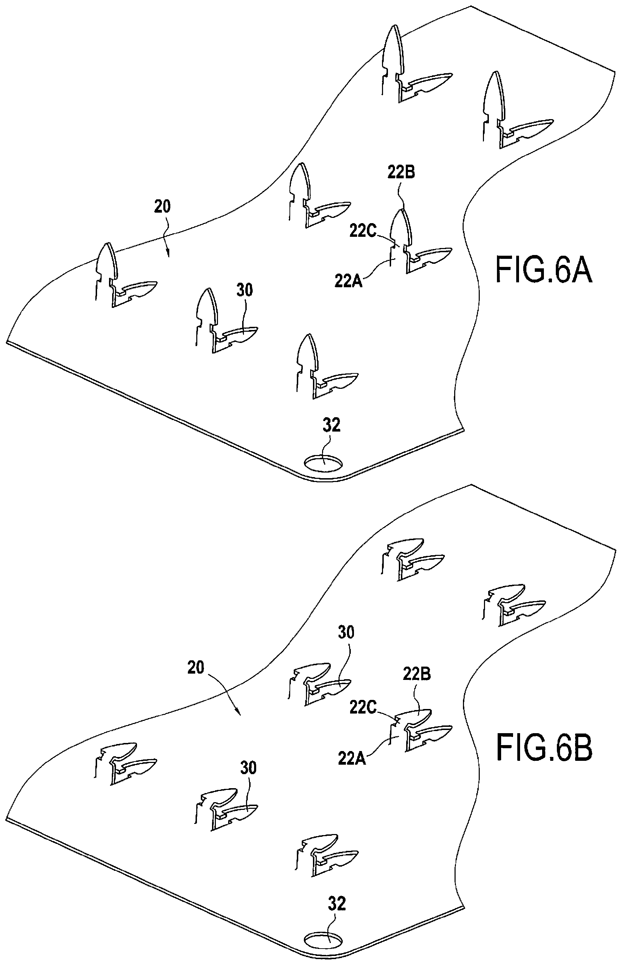

On a représenté sur les figures 6A et 6B un mode de réalisation alternatif des pattes de retenue 22 dans lequel le matériau isolant n'a pas été représenté. Dans le mode de réalisation des figures 6A et 6B, les la patte de retenue comporte une partie de pliage 22C, disposée entre la première partie 22A et la deuxième partie 22B de la patte de retenue 22. Cette partie de pliage 22C présente une largeur inférieure à la largeur des première et deuxième parties 22A, 22B de la patte de retenue 22. Cette partie de pliage 22C permet un pliage aisé de la patte de retenue 22. Par exemple, la découpe des pattes de retenue 22 peut être réalisée par découpe laser des pattes de retenue 22.

Une fois la plaque métallique 20 découpée et formée et les pattes de retenue formées, on pose 106 la première couche 24 de matériau isolant sur la plaque métallique 20 pour former une couche d'épaisseur 24A sensiblement constante. Par exemple, cette première couche 24 peut être obtenue par projection de Prosial^{®} sur la plaque métallique 20. La projection permet d'obtenir une couche d'épaisseur sensiblement constante. Le matériau isolant peut combler les orifices 30 de la plaque métallique 20. Les pattes de retenue 22 sont partiellement noyées dans la première couche 24 de matériau isolant.

On pose 108 ensuite la couche de fibres réfractaires 26 sur la première couche 24 de matériau isolant. La première couche 24 de matériau isolant est formée par du Prosial^{®} projeté mais non encore polymérisé.

On fixe 110 la première couche 24 de matériau isolant et la couche de fibres réfractaires 26 sur la plaque métallique 20 au moyen des pattes de retenue 22 en pliant ensuite la deuxième partie 22B de chaque patte de retenue 22 afin que la deuxième partie 22B soit approximativement parallèle à la plaque métallique 20.

On pose 112 ensuite la deuxième couche 28 de matériau isolant sur la couche de fibres réfractaires 26 pour former une couche d'épaisseur 2BA sensiblement constante. Par exemple, cette deuxième couche 24 peut être obtenue par projection de Prosial^{®} sur la couche de fibres réfractaires 26. La couche de fibres réfractaires 26 présentant des espaces entre les fibres réfractaires, le Prosial^{®} peut combler ces espaces. Par ailleurs, le matériau isolant des première et deuxième couches 24, 28 de matériau réfractaire étant identique, lors de la projection de la deuxième couche 28 de matériau isolant, la couche de fibres réfractaires 26 est noyée dans le matériau isolant.

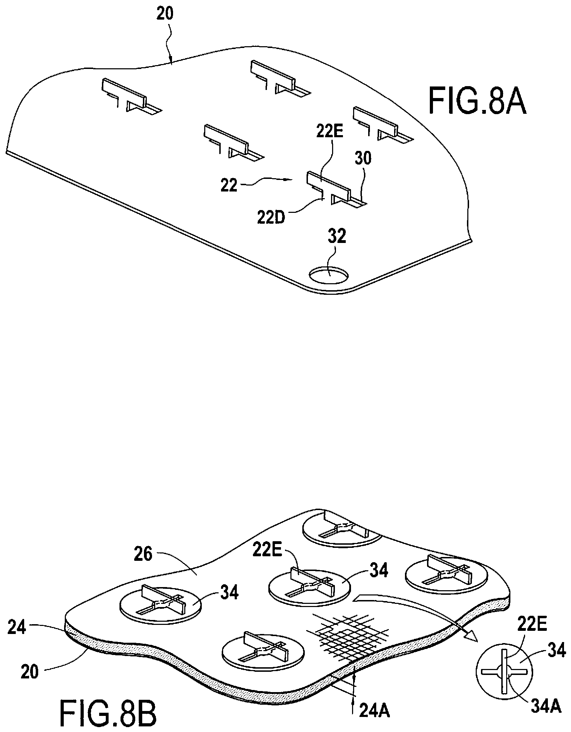

On a représenté sur les figures 8A et 8B un mode de réalisation alternatif des pattes de retenue 22.

Dans le mode de réalisation de la figure 8A, les pattes de retenue 22 sont découpées dans la plaque métallique 20 et ont une forme générale de « T », c'est-à-dire que la patte métallique 20 présente une première partie 22D formant la barre verticale du « T » et une deuxième partie 22E formant la barre horizontale du « T ».

Le procédé de fabrication 100 d'une protection thermique 18 avec les pattes de retenue 22 en forme de « T » diffère du procédé de fabrication décrit ci-dessus en ce que à l'étape 110, on fixe la première couche 24 de matériau isolant et la couche de fibres réfractaires 26 sur la plaque métallique 20 au moyen des pattes de retenue 22 et d'un élément d'arrêt.

Dans le mode de réalisation de la figure 8B, cet élément d'arrêt est par exemple une rondelle quart de tour 34 comportant une lumière 34A permettant le passage de la deuxième partie 22E de la patte de retenue 22. La rondelle quart de tour 34 vient en butée contre la première couche 24 de matériau isolant et la couche de fibres réfractaires 26 et est ensuite tournée d'un quart de tour de sorte que la lumière 34A ne coopère plus avec la deuxième partie 22E de la patte de retenue 22 et que la rondelle quart de tour 34 soit bloquée entre la première couche 24 de matériau isolant et la couche de fibres réfractaires 26 et la deuxième partie 22E de la patte de retenue 22.

On comprend que les figures ne sont pas à l'échelle. On comprend donc que la rondelle quart de tour 34 et la deuxième partie 22E de la patte de retenue 22 présentent une hauteur cumulée inférieure à la hauteur 28A de la deuxième couche 28 de matériau isolant. Ainsi, dans le mode de réalisation des figures 8A et 8B, la deuxième couche 28 de matériau isolant comporte un ancrage supplémentaire par rapport aux modes de réalisation précédemment décrits du fait que la deuxième partie 22E de la patte de retenue 22 est noyée dans la deuxième couche 28 de matériau isolant et forme un point d'attache supplémentaire de la deuxième couche 28 de matériau isolant sur la première couche 24 de matériau isolant, la couche de fibres réfractaires 26 et la plaque métallique 20.

Dans mode de réalisation avantageux, la première couche 24 de matériau isolant, la couche de fibres réfractaires 26 et la deuxième couche 28 de matériau isolant sont polymérisées ensemble. La première couche 24 de matériau réfractaire, la couche de fibres réfractaires et la deuxième couche 28 de matériau isolant forment ainsi un seul bloc dans lequel les pattes de retenue 22 sont ancrées. On obtient ainsi la protection thermique 18.

Dans un mode de réalisation avantageux alternatif, la première couche 24 de matériau isolant est réalisée par projection du matériau isolant sur la plaque métallique 20 et la couche de fibres réfractaires 26 est déposée sur la première couche 24 de matériau isolant. La première couche 24 de matériau isolant est polymérisée et emprisonne la couche de fibres réfractaires 26. La deuxième couche 28 de matériau isolant est ensuite réalisée par projection du matériau isolant sur la première couche 24 de matériau isolant polymérisée et la couche de fibres réfractaires 26 et la deuxième couche 28 de matériau isolant est polymérisée.

Cette protection thermique 18 est ensuite assemblée sur la surface extérieure 16S de la paroi 16 du divergent 12.

On comprend que le divergent 12 et donc la protection thermique 18 sont soumis à de fortes contraintes thermiques. La protection thermique 18 est également soumise à de fortes contraintes mécaniques, telles que des vibrations et/ou des forces de cisaillement par exemple lorsque la fusée passe le mur du son (« buffeting ») ou lorsque les propulseurs à poudre 14 fonctionnent et forment une onde de souffle.

Par exemple, pour une plaque métallique 20 réalisée en Inconel 625^{®} comportant une première couche 24 de Prosial^{®} dont l'épaisseur 24A est égale à environ 7 mm et une deuxième couche 28 de Prosial^{®} dont l'épaisseur 28A est égale à environ 7 mm. Aussi, l'épaisseur totale H de matériau isolant est égale à environ 14 mm. La couche de fibres réfractaires 26 est une couche de fibres de silice, en particulier, des fibres de silice fondue amorphe. Les fibres sont continues et présentent un diamètre supérieur ou égale à 9 µm (micromètre).

L'ensemble a été disposé entre deux flux, un sur chaque face, les flux représentant les flux en service, c'est-à-dire pendant le fonctionnement de l'ensemble. Des thermocouples ont été disposés dans l'ensemble et ont permis de mesurer les températures pendant l'essai. La température mesurée à proximité des pattes de retenue 22 et de la plaque métallique 20 est restée inférieure à 1000 K. Cette mesure permet également de valider le modèle thermique utilisé pour dimensionner la protection thermique 18.

Des essais mécaniques en traction réalisés à température ambiante et à chaud (T > 1700 K) ont permis de mesurer la force requise pour l'arrachement du matériau isolant de la plaque métallique. Ces essais quasi-statiques permettent de déterminer la valeur de l'accélération en essai de vibrations aléatoire, c'est-à-dire par excitation de toutes les fréquences simultanément. L'accélération déduite des mesures d'essais mécaniques en traction à chaud et requise pour détacher le matériau isolant de la plaque métallique est estimée à 300 gᵣₘₛ (racine carrée de la moyenne du carré de l'accélération exprimée en unité d'accélération). Dès lors que le matériau isolant n'est pas arraché de la plaque métallique 20 pour des accélérations de 100 gᵣₘₛ, la protection thermique 18 présente une tenue mécanique suffisante à chaud. On comprend que cette valeur inférieure ainsi que la température d'essai à chaud peuvent varier en fonction de l'application pour laquelle la protection thermique 18 est conçue.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

On comprend que la protection thermique 18 peut être assemblée sur un autre élément qu'un divergent de moteur de fusée.

L'angle de 90° entre la première partie 22A de la patte de retenue 22 et la plaque métallique 20 permet un bon ancrage de la patte de retenue 22 dans le matériau isolant. Toutefois, cet angle peut être différent de 90°. Il en va de même de l'angle entre la deuxième partie 22B de la patte de retenue 22 et la plaque métallique 20. En outre, comme la plaque métallique 20 peut présenter une courbure tridimensionnelle, l'angle entre la première partie 22A de la patte de retenue 22 et la plaque métallique 20 est mesuré par rapport à un plan tangent à la plaque métallique 20 au pied de la patte de retenue 20.

Sur les figures, les pattes de retenue 22 sont alignées et forment un quadrillage, les pattes de retenue 22 pourraient être disposée différemment, par exemple en quinconce.

## Revendications

1. Protection thermique (18) comprenant, superposées l'une sur l'autre dans l'ordre, une plaque métallique (20), une première couche (24) de matériau isolant, une couche de fibres réfractaires (26) et une deuxième couche (28) de matériau isolant, la plaque métallique (20) comportant des pattes de retenue (22) de la couche de fibres réfractaires (26).

2. Protection thermique (18) selon la revendication 1, dans laquelle la plaque métallique (20) est en superalliage.

3. Protection thermique (18) selon la revendication 1 ou 2, dans laquelle le matériau isolant de la deuxième couche (28) est un matériau isolant projeté.

4. Protection thermique (18) selon l'une quelconque des revendications précédentes, dans laquelle le matériau isolant de la première couche (24) est un matériau isolant projeté.

5. Protection thermique (18) selon l'une quelconque des revendications précédentes, dans laquelle la plaque métallique (20) comporte des moyens d'attache de la protection thermique (18) sur une surface à protéger.

6. Protection thermique (18) selon l'une quelconque des revendications précédentes, dans laquelle les pattes de retenue (22) sont formées par des crevés ménagés dans la plaque métallique (20).

7. Protection thermique (18) selon l'une quelconque des revendications précédentes, dans laquelle les fibres réfractaires sont des fibres de silice.

8. Divergent (12) de moteur de fusée comportant une protection thermique (18) selon l'une quelconque des revendications 1 à 7 assemblée sur une surface du divergent.

9. Procédé de fabrication d'une protection thermique (18) comprenant les étapes suivantes :
- découpe et mise en forme d'une plaque métallique (20) ;
- formation de pattes de retenue (22) sur la plaque métallique (20) ;
- pose d'une première couche (24) de matériau isolant sur la plaque métallique (20) ;
- pose d'une couche de fibres réfractaires (26) sur la première couche (24) de matériau isolant ;
- fixation de la première couche (24) de matériau isolant et de la couche de fibres réfractaires (26) sur la plaque métallique (20) au moyen des pattes de retenue (22) ;
- pose d'une deuxième couche (28) de matériau isolant sur la première couche (24) de matériau isolant et sur la couche de fibres réfractaires (26).

10. Procédé selon la revendication 9, dans lequel la formation des pattes de retenue (22) est réalisée par découpe partielle de la plaque métallique (20).

11. Procédé selon la revendication 9 ou 10, dans lequel la pose de la deuxième couche (28) de matériau isolant est réalisée par projection du matériau isolant sur la couche de fibres réfractaires (26).

12. Procédé selon la revendication 11, dans lequel la pose de la première couche (24) de matériau isolant est réalisée par projection du matériau isolant sur la plaque métallique (20) et dans lequel la première couche (24) de matériau isolant, la couche de fibres réfractaires (26) et la deuxième couche (28) de matériau isolant sont polymérisées en une étape unique sur la plaque métallique (20).

## Patentansprüche

1. Thermischer Schutz (18), der eine Metallplatte (20), eine erste Schicht (24) aus isolierendem Material, eine Schicht (26) aus hitzebeständigen Fasern und eine zweite Schicht (28) aus isolierendem Material umfasst, die in dieser Reihenfolge übereinander geschichtet sind, wobei die Metallplatte (20) Klauen (22) zum Halten der Schicht (26) aus hitzebeständigen Fasern beinhaltet.

2. Thermischer Schutz (18) nach Anspruch 1, wobei die Metallplatte (20) aus Superlegierung besteht.

3. Thermischer Schutz (18) nach Anspruch 1 oder 2, wobei das isolierende Material der zweiten Schicht (28) ein gesprühtes isolierendes Material ist.

4. Thermischer Schutz (18) nach einem der vorhergehenden Ansprüche, wobei das isolierende Material der ersten Schicht (24) ein gesprühtes isolierendes Material ist.

5. Thermischer Schutz (18) nach einem der vorhergehenden Ansprüche, wobei die Metallplatte (20) Mittel zur Anbringung des thermischen Schutzes (18) an einer zu schützenden Oberfläche beinhaltet.

6. Thermischer Schutz (18) nach einem der vorhergehenden Ansprüche, wobei die Halteklauen (22) aus Krägen gebildet sind, die in der Metallplatte (20) angeordnet sind.

7. Thermischer Schutz (18) nach einem der vorhergehenden Ansprüche, wobei die hitzebeständigen Fasern Fasern aus Siliziumdioxid sind.

8. Raketentriebwerksdüse (12), die einen thermischen Schutz (18) nach einem der Ansprüche 1 bis 7 beinhaltet, der auf einer Oberfläche der Düse montiert ist.

9. Verfahren zur Herstellung eines thermischen Schutzes (18), das die folgenden Schritte umfasst:
- Ausschneiden und Formgebung einer Metallplatte (20),
- Bilden von Halteklauen (22) auf der Metallplatte (20),
- Legen einer ersten Schicht (24) aus isolierendem Material auf die Metallplatte (20),
- Legen einer Schicht (26) aus hitzebeständigen Fasern auf die erste Schicht (24) aus isolierendem Material,
- Befestigen der ersten Schicht (24) aus isolierendem Material und der Schicht (26) aus hitzebeständigen Fasern an der Metallplatte (20) mittels der Halteklauen (22),
- Legen einer zweiten Schicht (28) aus isolierendem Material auf die erste Schicht (24) aus isolierendem Material und auf die Schicht (26) aus hitzebeständigen Fasern.

10. Verfahren nach Anspruch 9, wobei das Bilden der Halteklauen (22) durch partielles Ausschneiden der Metallplatte (20) ausgeführt wird.

11. Verfahren nach Anspruch 9 oder 10, wobei das Legen der zweiten Schicht (28) aus isolierendem Material durch Sprühen des isolierenden Materials auf die Schicht (26) aus hitzebeständigen Fasern ausgeführt wird.

12. Verfahren nach Anspruch 11, wobei das Legen der ersten Schicht (24) aus isolierendem Material durch Sprühen des isolierenden Materials auf die Metallplatte (20) ausgeführt wird und wobei die erste Schicht (24) aus isolierendem Material, die Schicht (26) aus hitzebeständigen Fasern und die zweite Schicht (28) aus isolierendem Material in einem einzigen Schritt auf der Metallplatte (20) polymerisiert werden.

## Claims

1. A thermal protection (18) comprising, superposed on each other in order, a metal plate (20), a first layer (24) of insulating material, a layer of refractory fibers (26) and a second layer (28) of insulating material, the metal plate (20) including retaining lugs (22) for the layer of refractory fibers (26).

2. The thermal protection (18) according to claim 1, wherein the metal plate (20) is made of superalloy.

3. The thermal protection (18) according to claim 1 or 2, wherein the insulating material of the second layer (28) is a sprayed insulating material.

4. The thermal protection (18) according to any one of the preceding claims, wherein the insulating material of the first layer (24) is a sprayed insulating material.

5. The thermal protection (18) according to any one of the preceding claims, wherein the metal plate (20) includes means for attaching the thermal protection (18) to a surface to be protected.

6. The thermal protection (18) according to any one of the preceding claims, wherein the retaining lugs (22) are formed by punctures made in the metal plate (20).

7. The thermal protection (18) according to any one of the preceding claims, wherein the refractory fibers are silica fibers.

8. A rocket engine nozzle section (12) including a thermal protection (18) according to any one of claims 1 to 7 assembled on a surface of the nozzle section.

9. A method for manufacturing a thermal protection (18) comprising the following steps:
- cutting and shaping a metal plate (20);
- forming retaining lugs (22) on the metal plate (20);
- placing a first layer (24) of insulating material on the metal plate (20);
- placing a layer of refractory fibers (26) on the first layer (24) of insulating material;
- fixing the first layer (24) of insulating material and the layer of refractory fibers (26) on the metal plate (20) by means of retaining lugs (22);
- placing a second layer (28) of insulating material on the first layer (24) of insulating material and on the layer of refractory fibers (26).

10. The method according to claim 9, wherein the formation of the retaining lugs (22) is carried out by partial cutting of the metal plate (20).

11. The method according to claim 9 or 10, wherein placing the second layer (28) of insulating material is carried out by spraying the insulating material onto the layer of refractory fibers (26).

12. The method according to claim 11, wherein placing the first layer (24) of insulating material is carried out by spraying the insulating material onto the metal plate (20) and wherein the first layer (24) of insulating material, the layer of refractory fibers (26) and the second layer (28) of insulating material are polymerized in a single step on the metal plate (20).
